# FASCICULE DE BREVET EUROPEEN

(11) **EP 2 790 495 B1**
(45) Date de publication et mention de la délivrance du brevet: **03.02.2016**
(21) Numéro de dépôt: 12816708.7
(22) Date de dépôt: 11.12.2012
(51) Int. Cl.: A01K 91/06, A01K 91/18

(54) **Dispositif de protection pour protéger un poisson capturé sur un hameçon et système de pêche comprenant un tel dispositif de protection**
Schutzvorrichtung zum Schutz eines gefangenen Fischs an einem Haken und System mit einer solchen Schutzvorrichtung
Protective device for protecting a fish caught on a hook and fishing system including such a protective device

(30) Priorité: 14.12.2011 FR 1161640
(43) Date de publication de la demande: 22.10.2014
(73) Titulaire: Institut De Recherche Pour Le Développement (IRD), 13002 Marseille 2 (FR)
(72) Inventeur: BACH, Pascal, F-97460 Saint-Paul (FR); RABEARISOA, Njaratiana, F-97434 Boucan Canot (FR); COTEL, Pascal, F-97400 Saint Denis (FR); LAMOUREUX, Jean-Pierre, F-97460 La Plaine Saint-Paul (FR)
(74) Mandataire: Cabinet Plasseraud
(86) Numéro de dépôt international: PCT/FR2012/052881
(87) Numéro de publication internationale: WO 2013/088058

(56) Documents cités:
- WO-A1-2011/021946
- GB-A- 2 335 584
- JP-U- H0 611 465
- JP-U- 59 014 569

## Description

L'invention se rapporte à un dispositif de protection pour protéger un poisson capturé sur un hameçon et à un système de pêche comprenant un tel système de protection.

Sans y être limitée, l'invention s'applique à la pêche palangrière de grands poissons pélagiques, tels que des thons ou des espadons, et peut être mise en oeuvre dans un système de pêche qui comprend :
- une ligne, notamment verticale, ou avançon, et
- au moins un hameçon monté sur la ligne et éventuellement équipé d'un appât.

Le dispositif de protection vise à protéger le poisson capturé sur l'hameçon de la déprédation par un odontocète (mammifère marin à dents) repérant le poisson capturé soit visuellement soit au moyen d'un signal acoustique réfléchi en réponse à un signal acoustique émis par l'odontocète (écho-location).

Un dispositif de protection connu, voir par exemple JP 59 014569 U ou GB 2 335 584 A, comporte un corps présentant un axe, et une pluralité d'éléments de protection allongés présentant chacun une première extrémité reliée au corps et une deuxième extrémité libre, les premières extrémités des éléments de protection étant réparties autour de l'axe du corps, conformément au préambule de la revendication 1.

L'invention vise à améliorer la protection du poisson capturé.

A cet effet, selon un premier aspect, l'invention propose un dispositif de protection du type précité dans lequel la pluralité d'éléments de protection comprend :
- des premiers éléments de protection présentant une première flottabilité, lesdits premiers éléments de protection étant destinés à se déployer en s'écartant du corps au-dessus de l'hameçon, et
- des deuxièmes éléments de protection présentant une deuxième flottabilité, inférieure à la première flottabilité, lesdits deuxièmes éléments de protection étant destinés à entourer l'hameçon.

Ainsi, le dispositif de protection selon l'invention combine deux niveaux de protection du poisson capturé : une protection visuelle constituée par les premiers éléments de protection flottant au-dessus de l'hameçon et du poisson pour effaroucher l'odontocète, et une protection physique et visuelle constituée par les deuxièmes éléments de protection entourant le poisson pour en réduire l'accessibilité et le masquer vis-à-vis d'un repérage visuel.

En particulier, la première flottabilité peut être adaptée pour permettre aux premiers éléments de protection de s'étendre sensiblement perpendiculairement à l'axe du corps et la deuxième flottabilité peut être adaptée pour permettre aux deuxièmes éléments de protection de s'étendre sensiblement parallèlement à l'axe du corps.

Les premiers éléments de protection peuvent présenter une flottabilité positive et les deuxièmes éléments de protection peuvent présenter une flottabilité négative.

Les premiers éléments de protection peuvent être des bandes souples, notamment en matière plastique.

Les deuxièmes éléments de protection peuvent être des chaînes d'anneaux, notamment en métal.

De manière avantageuse, le dispositif de protection peut comporter en outre une pluralité de cibles de réflexion acoustique fixées chacune sur l'un des éléments de protection et adaptées pour modifier le signal acoustique réfléchi.

Le dispositif de protection combine ainsi les deux niveaux de protection du poisson capturé mentionnés précédemment avec un troisième niveau de protection, à savoir une protection acoustique constituée par les cibles de réflexion acoustique pour masquer le poisson vis-à-vis d'un repérage acoustique par écho-location.

Les cibles de réflexion acoustique peuvent être fixées aux premiers éléments de protection, notamment aux deuxièmes extrémités des premiers éléments de protection.

Les cibles de réflexion acoustique peuvent alors être des billes creuses à flottabilité positive.

Le corps peut présenter une base destinée à être placée du côté de l'hameçon, les premières extrémités des premiers éléments de protection peuvent être agencées sensiblement dans au moins un premier plan radial par rapport à l'axe du corps et les premières extrémités des deuxièmes éléments de protection peuvent être agencées sensiblement dans au moins un deuxième plan radial par rapport à l'axe du corps, le premier plan étant placé à une distance de la base du corps supérieure à celle du deuxième plan.

Selon un deuxième aspect, l'invention propose un système de pêche pour capturer un poisson, tel que revendiqué dans la revendication 10, comprenant :
- une ligne,
- au moins un hameçon monté sur la ligne, et
- au moins un dispositif de protection tel que défini précédemment, le dispositif de protection étant monté sur la ligne.

Le dispositif de protection peut être déplaçable entre une position de repos, dans laquelle le corps est à distance de l'hameçon, et une position active, dans laquelle le corps est à proximité de l'hameçon, les premiers éléments de protection sont déployés en s'écartant du corps au-dessus de l'hameçon et les deuxièmes éléments de protection entourent l'hameçon.

Le système de pêche peut comprendre en outre un dispositif de déclenchement automatique adapté pour faire passer le dispositif de protection de la position de repos à la position active lorsqu'une traction est exercée sur la ligne par le poisson lors de la capture dudit poisson sur l'hameçon.

En particulier, le dispositif de déclenchement automatique peut comprendre un organe de retenu adapté pour retenir le dispositif de protection dans la position de repos et pour libérer le dispositif de protection lorsqu'une traction est exercée sur la ligne, le dispositif de protection présentant globalement une flottabilité négative et étant monté coulissant sur la ligne.

L'organe de retenu peut notamment être un étui placé à distance de l'hameçon et adapté pour, dans un état fermé, retenir le dispositif de protection, et, dans un état ouvert, libérer le dispositif de protection.

L'étui contenant le dispositif de protection peut ainsi être facilement installé dans des zones de pêche fréquentées par les odontocètes. L'ouverture de l'étui entraînant la libération du dispositif de protection se fait sous l'effet de la traction sur la ligne par un poisson capturé sur l'hameçon.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :

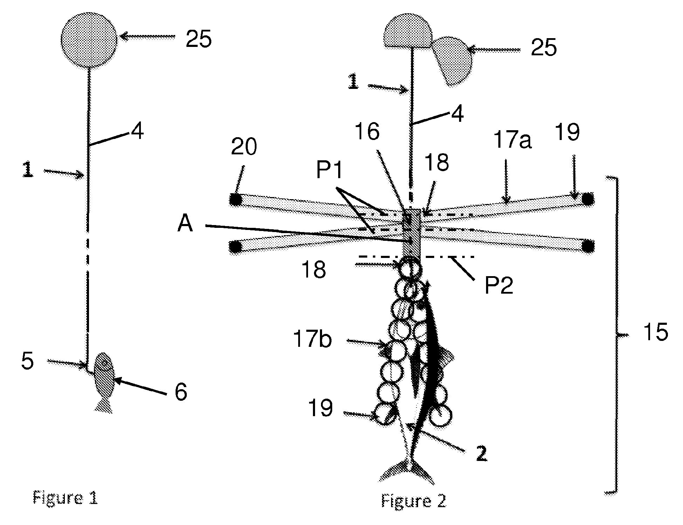

- la figure 1 est une représentation d'un système de pêche comprenant un dispositif de protection selon un mode de réalisation de l'invention placé dans un étui, dans une position de repos à distance d'un hameçon,
- la figure 2 est une représentation du système de pêche de la figure 1, illustrant le dispositif de protection dans une position active à proximité de l'hameçon, des premiers éléments de protection pourvus de cibles de réflexion acoustique étant déployées au-dessus du poisson capturé sur l'hameçon, et des deuxièmes éléments de protection recouvrant une partie essentielle du poisson capturé sur l'hameçon.

Sur les figures, les mêmes références désignent des éléments identiques ou analogues.

Les figures 1 et 2 représentent un système de pêche 1 pouvant notamment être utilisé dans la pêche palangrière pour capturer de grands poissons pélagiques 2 dont le poids peut varier de 20 kg à 200 kg, tels que des thons ou des espadons.

Le système de pêche 1 comprend un ou plusieurs hameçons 5 montés sur une ligne de pêche. Dans l'application particulière à la pêche palangrière, des avançons 4, ou bas de lignes, dont le nombre peut varier de 100 à 1500, sont régulièrement disposés le long d'une ligne-mère, non représentée, qui peut être un mono-filament en nylon de l'ordre de 3 mm à 4 mm de diamètre et dont la longueur peut être comprise entre 15 km et 120 km. Les avançons 4 sont, par exemple, constitués par des mono-filaments en nylon de l'ordre de 2 mm de diamètre équipés à leur extrémité libre de l'un des hameçons 5, généralement pourvu d'un appât 6.

Pour chacun des avançons 4, un dispositif de protection 15 est prévu pour protéger le poisson 2 capturé sur l'hameçon 5 de la déprédation par un odontocète, un mammifère marin à dents tel qu'un globicéphale ou un faux-orque, repérant le poisson 2 capturé sur l'hameçon 5 soit visuellement soit par écho-location, c'est-à-dire au moyen d'un signal acoustique réfléchi en réponse à un signal acoustique émis par l'odontocète.

Comme représenté sur la figure 2, le dispositif de protection 15 comporte un corps 16, par exemple, cylindrique selon un axe A, rigide et conçu dans un matériau à forte flottabilité négative. Le corps 16 présente une base placée du côté de l'hameçon 5. Le dispositif de protection 15 comporte également plusieurs éléments de protection 17. Les éléments de protection 17 sont reliés au corps 16 par des premières extrémités 18 respectives, fixes, et s'étendent jusqu'à des deuxièmes extrémités 19 respectives, libres.

En particulier, les éléments de protection 17 comprennent des premiers éléments de protection 17a et des deuxièmes éléments de protection 17b dont les flottabilités respectives sont choisies pour que les premiers éléments de protection 17a puissent se déployer en s'écartant du corps 16 au-dessus de l'hameçon 5, et que les deuxièmes éléments de protection 17a puissent entourer l'hameçon 5.

Dans le mode de réalisation représenté, les premiers éléments de protection 17a présentent une première flottabilité, positive, et sont réalisés sous la forme de bandes rectangulaires, souples, déformables et en matière plastique. Les bandes 17a ont leurs premières extrémités 18 respectives réparties autour de l'axe A du corps 16 sensiblement dans un ou plusieurs premiers plans P1, radiaux par rapport à l'axe A du corps 16. Par ailleurs, chaque bande 17a peut présenter, entre ses première 18 et deuxième 19 extrémités, une longueur supérieure à 1 m, notamment de l'ordre de 1,50 m.

Les deuxièmes éléments de protection 17b présentent une deuxième flottabilité, inférieure à la première flottabilité, notamment négative, et sont, dans le mode particulier de réalisation représenté, réalisés sous la forme de chaînes d'anneaux pouvant être métalliques. Les chaînes 17b ont leurs premières extrémités 18 respectives réparties autour de l'axe A du corps 16 sensiblement dans un ou plusieurs deuxièmes plans P2, radiaux par rapport à l'axe A du corps 16. Les premiers plans P1 sont placés à des distances de la base du corps 16 et donc de l'hameçon 5 supérieures à celles des deuxièmes plans P2. Par ailleurs, chaque chaîne 17b peut présenter, entre ses première 18 et deuxième 19 extrémités, une longueur supérieure à 1 m, notamment de l'ordre de 1,20 m.

Le dispositif de protection 15 comporte en outre des billes 20 fixées respectivement sur les bandes 17a. Les billes 20 présentant chacune une surface extérieure sphérique constituent des cibles de réflexion acoustique permettant de modifier, en l'amplifiant, le signal acoustique réfléchi en réponse au signal acoustique émis par l'odontocète. L'invention n'est pas limitée à la réalisation de cibles de réflexion acoustique sous la forme de billes. Toute autre cible de réflexion acoustique présentant une surface extérieure courbe ou une toute autre caractéristique adaptée pour modifier le signal acoustique réfléchi pourrait être utilisé. En outre, dans d'autres modes de réalisation, des cibles de réflexion acoustiques pourraient être prévues sur les deuxièmes éléments de protection 17b.

Les billes 20 peuvent, par ailleurs, être prévues pour conférer aux bandes 17a une flottabilité positive. En particulier, les billes 20, creuses, sont fixées aux extrémités libres 19 des bandes 17a et présentent une flottabilité positive.

L'invention n'est pas limitée aux éléments de protection décrits précédemment. Les différences de flottabilité entre les premiers éléments de protection 17a et les deuxièmes éléments de protection 17b peuvent provenir de leurs structures respectives ou des matériaux mis en oeuvre. D'autres structures et d'autres matériaux peuvent alors être mis en oeuvre pour obtenir les caractéristiques de flottabilité requises. On pourrait également prévoir d'induire des différences de flottabilité par l'agencement de billes ou autre organes de lestage, éventuellement de natures différentes, sur les premiers 17a et deuxièmes 17b éléments de protection.

Comme il ressort des figures 1 et 2, le dispositif de protection 15 est déplaçable le long de l'avançon 4 entre une position de repos représentée sur la figure 1 et une position active représentée sur la figure 2.

Dans la position de repos, le corps 16 du dispositif de protection 15 est à distance de l'hameçon 5 pour permettre la capture d'un poisson 2 sur l'hameçon 5 équipé, le cas échéant, d'un appât 6 pour en améliorer l'efficacité. Il peut alors être logé dans un étui 25, dans un état fermé, fixé sur l'avançon 4.

Lorsqu'une traction est exercée sur l'hameçon 5 par le poisson 2 lors de sa capture, cette traction peut être transmise à l'avançon 4 pour actionner un dispositif de déclenchement automatique faisant passer automatiquement le dispositif de protection 15 de la position repos (figure 1) à la position active (figure 2).

Dans le mode de réalisation représenté, le dispositif de déclenchement automatique fait passer l'étui 25 de l'état fermé à un état ouvert. L'étui 25 constitue un organe de blocage qui, dans l'état fermé, retient le dispositif de protection 15 dans la position de repos et, dans l'état ouvert, libère le dispositif de protection 15. Du fait de la flottabilité négative du corps 16 et des chaînes 17b, lorsque l'étui 25 est dans l'état ouvert, le dispositif de protection 15 peut coulisser le long de l'avançon 4 pour atteindre la position active.

Dans la position active, le corps 16 est situé en dehors de l'étui 25, à proximité de l'hameçon 5. Les bandes 17a, non lestées, se déploient en s'écartant du corps 16 au-dessus de l'hameçon 5 et du poisson 2 capturé sur l'hameçon 5. Dans le mode de réalisation représenté, la flottabilité des bandes 17a est telle que les bandes 17a flottent sensiblement horizontalement, perpendiculairement à l'axe A du corps 16. Les chaînes 17b, avec une flottabilité négative, s'étendent sensiblement parallèlement à l'axe A du corps 16 pour entourer l'hameçon 5 de manière à recouvrir au moins une partie essentielle du poisson 2 capturé sur l'hameçon 5.

Les billes 20 assurent une protection acoustique du poisson 2 par rapport à l'odontocète dont la capacité à repérer le poisson par écho-location est réduite du fait de la modification du signal acoustique réfléchi. Les chaînes 17b assurent une protection physique et visuelle du poisson 2 en formant une barrière autour du poisson 2. Les bandes 17a assurent enfin un autre niveau de protection visuelle du poisson 2 par rapport à l'odontocète en l'effarouchant et en le maintenant à distance.

## Revendications

1. Dispositif de protection (15) pour protéger un poisson (2) capturé sur un hameçon (5) de la déprédation par un odontocète repérant le poisson (2) capturé soit visuellement soit au moyen d'un signal acoustique réfléchi en réponse à un signal acoustique émis par l'odontocète, ledit dispositif de protection (15) comportant un corps (16) présentant un axe (A), et une pluralité d'éléments de protection (17) allongés présentant chacun une première extrémité (18) reliée au corps (16) et une deuxième extrémité (19) libre, les premières extrémités (18) des éléments de protection (17) étant réparties autour de l'axe (A) du corps (16),
ledit dispositif de protection (15) étant **caractérisé en ce que** la pluralité d'éléments de protection (17) comprend :
- des premiers éléments de protection (17a) présentant une première flottabilité, lesdits premiers éléments de protection (17a) étant destinés à se déployer en s'écartant du corps (16) au-dessus de l'hameçon (5), et
- des deuxièmes éléments de protection (17b) présentant une deuxième flottabilité, inférieure à la première flottabilité, lesdits deuxièmes éléments de protection (17a) étant destinés à entourer l'hameçon (5).

2. Dispositif de protection (15) selon la revendication 1, dans lequel la première flottabilité est adaptée pour permettre aux premiers éléments de protection (17a) de s'étendre sensiblement perpendiculairement à l'axe (A) du corps (16) et la deuxième flottabilité est adaptée pour permettre aux deuxièmes éléments de protection (17b) de s'étendre sensiblement parallèlement à l'axe (A) du corps (16).

3. Dispositif de protection (15) selon la revendication 1 ou 2, dans lequel les premiers éléments de protection (17a) présentent une flottabilité positive et les deuxièmes éléments de protection (17b) présentent une flottabilité négative.

4. Dispositif de protection (15) selon l'une quelconque des revendications 1 à 3, dans lequel les premiers éléments de protection (17a) sont des bandes souples, notamment en matière plastique.

5. Dispositif de protection (15) selon l'une quelconque des revendications 1 à 4, dans lequel les deuxièmes éléments de protection (17b) sont des chaînes d'anneaux, notamment en métal.

6. Dispositif de protection (15) selon l'une quelconque des revendications 1 à 5, comportant en outre une pluralité de cibles de réflexion acoustique (20) fixées chacune sur l'un des éléments de protection (17) et adaptées pour modifier le signal acoustique réfléchi.

7. Dispositif de protection (15) selon la revendication 6, dans lequel les cibles de réflexion acoustique (20) sont fixées aux premiers éléments de protection (17a), notamment aux deuxièmes extrémités (19) des premiers éléments de protection (17a).

8. Dispositif de protection (15) selon la revendication 7, dans lequel les cibles de réflexion acoustique sont des billes (20) creuses, à flottabilité positive.

9. Dispositif de protection (15) selon l'une quelconque des revendications 1 à 8, dans lequel le corps (16) présente une base destinée à être placée du côté de l'hameçon (5), les premières extrémités (18) des premiers éléments de protection (17a) sont agencées sensiblement dans au moins un premier plan (P1) radial par rapport à l'axe (A) du corps (16) et les premières extrémités (18) des deuxièmes éléments de protection (17b) sont agencées sensiblement dans au moins un deuxième plan (P2) radial par rapport à l'axe (A) du corps (16), le premier plan (P1) étant placé à une distance de la base du corps (16) supérieure à celle du deuxième plan (P2).

10. Système de pêche (1) pour capturer un poisson (2), comprenant :
- une ligne (4),
- au moins un hameçon (5) monté sur la ligne (4), et
- au moins un dispositif de protection (15) selon l'une quelconque des revendications 1 à 9, le dispositif de protection (15) étant monté sur la ligne (4).

11. Système de pêche (1) selon la revendication 10, dans lequel le dispositif de protection (15) est déplaçable entre une position de repos, dans laquelle le corps (16) est à distance de l'hameçon (5), et une position active, dans laquelle le corps (16) est à proximité de l'hameçon (5), les premiers éléments de protection (17a) sont déployés en s'écartant du corps (16) au-dessus de l'hameçon (5) et les deuxièmes éléments de protection (17b) entourent l'hameçon (5).

12. Système de pêche (1) selon la revendication 10 ou 11, comprenant en outre un dispositif de déclenchement automatique adapté pour faire passer le dispositif de protection (15) de la position de repos à la position active lorsqu'une traction est exercée sur la ligne (4) par le poisson (2) lors de la capture dudit poisson (2) sur l'hameçon (5).

13. Système de pêche (1) selon la revendication 12, dans lequel le dispositif de déclenchement automatique comprend un organe de retenu adapté pour retenir le dispositif de protection (15) dans la position de repos et pour libérer le dispositif de protection (15) lorsqu'une traction est exercée sur la ligne (4), le dispositif de protection (15) présentant globalement une flottabilité négative et étant monté coulissant sur la ligne (4).

14. Système de pêche (1) selon la revendication 13, dans lequel l'organe de retenu est un étui (25) placé à distance de l'hameçon (5) et adapté pour, dans un état fermé, retenir le dispositif de protection (15), et, dans un état ouvert, libérer le dispositif de protection (15).

## Patentansprüche

1. Schutzvorrichtung (15) zum Schutz eines an einem Haken (5) gefangenen Fischs (2) davor, von einem Zahnwal geraubt zu werden, der den gefangenen Fisch (2) visuell oder mit Hilfe eines akustischen Signals, das als Antwort auf ein von dem Zahnwal ausgesandtes akustisches Signal reflektiert worden ist, entdeckt hat, wobei die Schutzvorrichtung (15) einen Körper (16) mit einer Achse (A) und mehrere längliche Schutzelemente (17) aufweist, die jeweils ein mit dem Körper (16) verbundenes erstes Ende (18) und ein freies zweites Ende (19) aufweisen, wobei die ersten Enden (18) der Schutzelemente (17) um die Achse (A) des Körpers (16) herum verteilt angeordnet sind,
wobei die Schutzvorrichtung (15) **dadurch gekennzeichnet ist, dass** die mehreren Schutzelemente (17) aufweisen:
- erste Schutzelemente (17a) mit einer ersten Schwimmfähigkeit, wobei die ersten Schutzelemente (17a) vorgesehen sind, sich durch Abspreizen von dem Körper (16) oberhalb des Hakens (5) aufzuspannen, und
- zweite Schutzelemente (17b) mit einer zweiten Schwimmfähigkeit, die kleiner als die erste Schwimmfähigkeit ist, wobei die zweiten Schutzelemente (17b) vorgesehen sind, den Haken (5) zu umgeben.

2. Schutzvorrichtung (15) nach Anspruch 1, wobei die erste Schwimmfähigkeit angepasst ist, den ersten Schutzelementen (17a) zu erlauben, sich im Wesentlichen senkrecht zur Achse (A) des Körpers (16) auszubreiten, und die zweite Schwimmfähigkeit angepasst ist, den zweiten Schutzelementen (17b) zu erlauben, sich im Wesentlichen parallel zur Achse (A) des Körpers (16) auszubreiten.

3. Schutzvorrichtung (15) nach Anspruch 1 oder 2, wobei die ersten Schutzelemente (17a) eine positive Schwimmfähigkeit aufweisen und die zweiten Schutzelemente (17b) eine negative Schwimmfähigkeit aufweisen.

4. Schutzvorrichtung (15) nach einem der Ansprüche 1 bis 3, wobei die ersten Schutzelemente (17a) flexible Bänder insbesondere aus Kunststoffmaterial sind.

5. Schutzvorrichtung (15) nach einem der Ansprüche 1 bis 4, wobei die zweiten Schutzelemente (17b) Ketten von Ringen insbesondere aus Metall sind.

6. Schutzvorrichtung (15) nach einem der Ansprüche 1 bis 5, ferner mit mehreren akustisch reflektierenden Teilen (20), die jeweils an einem der Schutzelemente (17) angebracht sind und das reflektierte akustische Signal modifizieren können.

7. Schutzvorrichtung (15) nach Anspruch 6, wobei die akustisch reflektierenden Teile (20) an den ersten Schutzelementen (17a), insbesondere an den zweiten Enden (19) der ersten Schutzelemente (17a) angebracht sind.

8. Schutzvorrichtung (15) nach Anspruch 7, wobei die akustisch reflektierenden Teile Hohlkugeln (20) mit einer positiven Schwimmfähigkeit sind.

9. Schutzvorrichtung (15) nach einem der Ansprüche 1 bis 8, wobei der Körper (16) eine zum Haken (5) hin gerichtete Basis aufweist, wobei die ersten Enden (18) der ersten Schutzelemente (17a) im Wesentlichen in mindestens einer bezüglich der Achse (A) des Körpers (16) radialen ersten Ebene (P1) angeordnet sind und die ersten Enden (18) der zweiten Schutzelemente (17b) im Wesentlichen in mindestens einer bezüglich der Achse (A) des Körpers (16) radialen zweiten Ebene (P2) angeordnet sind, wobei die erste Ebene (P1) in einem größeren Abstand von der Basis des Körpers (16) angeordnet ist als die zweite Ebene (P2).

10. Fischfangsystem (1) zum Fangen eines Fisches (2), mit
- einer Leine (4)
- mindestens einem an der Leine (4) angebrachten Haken (5) und
- mindestens einer Schutzvorrichtung (5) nach einem der Ansprüche 1 bis 9, wobei die Schutzvorrichtung (15) an der Leine (4) angebracht ist.

11. Fischfangsystem (1) nach Anspruch 10, wobei die Schutzvorrichtung (15) verschiebbar ist zwischen einer Ruheposition, in welcher der Körper (16) in einem gewissen Abstand vom Haken (5) ist, und einer aktiven Position, in welcher der Körper (16) in der Nähe des Hakens (5) ist, wobei die ersten Schutzelemente (17a) durch Abspreizen von dem Körper (16) oberhalb des Hakens (5) aufgespannt worden sind und die zweiten Schutzelemente (17b) den Haken (5) umgeben.

12. Fischfangsystem (1) nach Anspruch 10 oder 11, ferner mit einer automatischen Auslösevorrichtung, die angepasst ist, einen Übergang der Schutzvorrichtung (15) aus der Ruheposition in die aktive Position auszulösen, wenn beim Fang eines Fisches (2) an dem Haken (5) von dem Fisch (2) eine Zugkraft auf die Leine (4) ausgeübt wird.

13. Fischfangsystem (1) nach Anspruch 12, wobei die automatische Auslösevorrichtung eine Haltevorrichtung aufweist, die angepasst ist, die Schutzvorrichtung (15) in der Ruheposition zu halten und, wenn eine Zugkraft auf die Leine (4) ausgeübt wird, die Schutzvorrichtung (15) freizugeben, wobei die Schutzvorrichtung (15) insgesamt eine negative Schwimmfähigkeit aufweist und gleitend an der Leine (4) angebracht ist.

14. Fischfangsystem (1) nach Anspruch 13, wobei die Haltevorrichtung ein in Abstand von dem Haken (5) angeordneter Behälter (15) ist, der angepasst ist, in einem geschlossenen Zustand die Schutzvorrichtung (15) zurückzuhalten und in einem geöffneten Zustand die Schutzvorrichtung (15) freizugeben.

## Claims

1. Protective device (15) for protecting a fish (2) caught on a hook (5) from predation by odontoceti that could find the caught fish (2) either visually or by means of an acoustic signal reflected in response to an acoustic signal emitted by the odontoceti, said protective device (15) comprising a body (16) having an axis (A) and a plurality of elongate protective elements (17) each having a first end (18) connected to the body (16) and a free second end (19), the first ends (18) of the protective elements (17) being distributed about the axis (A) of the body (16),
said protective device (15) being **characterized in that** the plurality of protective elements (17) comprises:
- first protection elements (17a) having a first buoyancy, said first protective elements (17a) being adapted to deploy outward from the body (16) above the hook (5), and
- second protective elements (17b) having a second buoyancy that is less than the first buoyancy, said second protective elements (17b) being adapted to surround the hook (5).

2. Protective device (15) according to claim 1, wherein the first buoyancy is adapted to allow the first protective elements (17a) to extend substantially perpendicularly to the axis (A) of the body (16) and the second buoyancy is adapted to allow the second protective elements (17b) to extend substantially parallel to the axis (A) of the body (16).

3. Protective device (15) according to claim 1 or 2, wherein the first protective elements (17a) have a positive buoyancy and the second protective elements (17b) have a negative buoyancy.

4. Protective device (15) according to any one of claims 1 to 3, wherein the first protective elements (17a) are flexible strips, in particular of plastic.

5. Protective device (15) according to any one of claims 1 to 4, wherein the second protective elements (17b) are chains of rings, in particular of metal.

6. Protective device (15) according to any one of claims 1 to 5, further comprising a plurality of acoustic reflection targets (20) which are each attached to one of the protective elements (17) and are adapted to modify the reflected acoustic signal.

7. Protective device (15) according to claim 6, wherein the acoustic reflection targets (20) are attached to the first protective elements (17a), particularly at the second ends (19) of the first protective elements (17a).

8. Protective device (15) according to claim 7, wherein the acoustic reflection targets are hollow balls (20) with positive buoyancy.

9. Protective device (15) according to any one of claims 1 to 8, wherein the body (16) has a base intended to be placed next to the hook (5), the first ends (18) of the first protective elements (17a) are arranged substantially in at least a first plane (P1) that is radial relative to the axis (A) of the body (16), and the first ends (18) of the second protective elements (17b) are arranged substantially in at least a second plane (P2) that is radial to the axis (A) of the body (16), the first plane (P1) being located at a greater distance from the base of the body (16) than the second plane (P2).

10. Fishing system (1) for catching fish (2), comprising:
- a line (4),
- at least one hook (5) mounted on the line (4), and
- at least one protective device (15) according to any one of claims 1 to 9, the protective device (15) being mounted on the line (4).

11. Fishing system (1) according to claim 10, wherein the protective device (15) is movable between: a rest position in which the body (16) is at a distance from the hook (5); and an active position in which the body (16) is close to the hook (5), the first protective elements (17a) are deployed outward from the body (16) above the hook (5), and the second protective elements (17b) surround the hook (5).

12. Fishing system (1) according to claim 10 or 11, further comprising an automatic activation device adapted to transition the protective device (15) from the rest position to the active position when traction is exerted by a fish (2) on the line (4) during the capture of said fish (2) on the hook (5).

13. Fishing system (1) according to claim 12, wherein the automatic activation device comprises a retaining means suitable for retaining the protective device (15) in the rest position and for releasing the protective device (15) when traction is exerted on the line (4), the protective device (15) having negative buoyancy overall and being slidably mounted on the line (4).

14. Fishing system (1) according to claim 13, wherein the retaining means is a shell (25) placed at a distance from the hook (5) and suitable for retaining the protective device (15) when in a closed state, and for releasing the protective device (15) when in an open state.
